# EUROPEAN PATENT SPECIFICATION

(11) **EP 2 124 349 B1**
(45) Date of publication and mention of the grant of the patent: **23.01.2013**
(21) Application number: 07850644.1
(22) Date of filing: 14.12.2007
(51) Int. Cl.: H04B 1/707, H04B 1/40, H04L 7/00, H04L 27/00

(54) **WIRELESS COMMUNICATION DEVICE**
DRAHTLOSES KOMMUNIKATIONSGERÄT
DISPOSITIF DE RADIOCOMMUNICATION

(30) Priority: 19.01.2007 JP 2007010655
(43) Date of publication of application: 25.11.2009
(73) Proprietor: Nihon Dempa Kogyo Co., Ltd., Shibuya-ku Tokyo 151-8569 (JP)
(72) Inventor: KOBAYASHI, Kaoru, Chitose-shi Hokkaido 066-0009 (JP); TAKEGISHI, Shigeru, Chitose-shi Hokkaido 066-0009 (JP)
(74) Representative: Liesegang, Eva
(86) International application number: PCT/JP2007/074140
(87) International publication number: WO 2008/087820

(56) References cited:
- JP-A- 07 336 342
- JP-A- 11 331 133
- JP-A- 2006 246 059
- JP-A- 2006 246 059
- JP-A- 2006 261 985
- US-A1- 2003 031 275
- DAVID AKOPIAN ET AL: "Fast DS-SS Acquisition Implementation for High Sensitivity Receivers", WIRELESS TELECOMMUNICATIONS SYMPOSIUM, 2006. WTS '06, IEEE, PI, 1 April 2006 (2006-04-01), pages 1-7, XP031064228, ISBN: 978-1-4244-0045-4

## Description

### Technical Field

The present invention relates to a wireless communication device adapted for use in a bidirectional wireless system and, more particularly, to a wireless communication device which makes it possible to properly and efficiently carry out correlation peak detection processing of a receiving unit. A wireless communication device according to the preamble of claim 1 is known from JP 2006 246059 A.

### Background Art

US 2003/0031275 A I describes a burst detection and acquisition system based on a parameter estimation in a shared channel communication system. The method comprises receiving a preamble including first, second and third sequences having zero auto-correlation, wherein a coarse carrier frequency estimate is based on the first sequence and a fine carrier frequency estimate is based on the third and second sequences.

David Akopian et al. describe in "Fast DS-SS Acquisition Implementation for High Sensitivity Receivers", Wireless Telecommunications Symposium, 2006, pages I to 7, ISBN: 978-1-4244-0045-4, receivers wherein pseudo-random codes are used in DS-SS receivers to synchronize the received signals with locally generated replica. A coarse synchronization is followed by a finer synchronization.

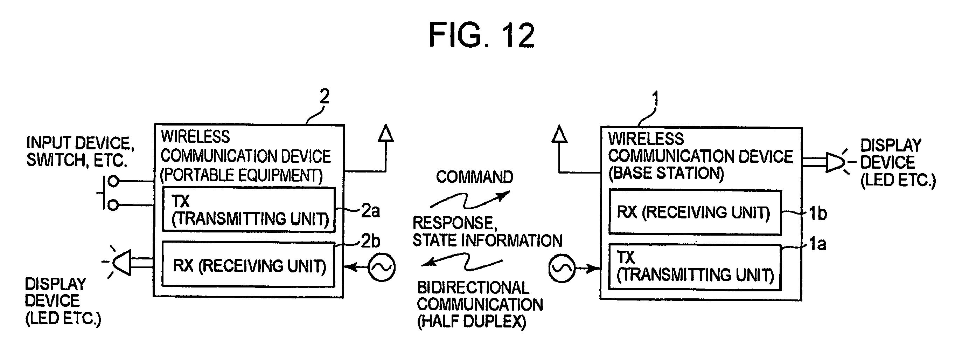

### [Bidirectional Wireless System: Fig. 12]

A wireless communication device that has been conventionally used in a bidirectional wireless system adopts a spread spectrum (hereinafter, referred to as "SS") scheme to operate in weak radio waves.

The conventional bidirectional wireless system will now be described with reference to Fig. 12. Fig. 12 is a schematic diagram illustrating the conventional bidirectional wireless system.

The conventional bidirectional wireless system is provided with a wireless communication device as a base station 1 which has a transmitting unit 1a and a receiving unit 1b, and a wireless communication device as a portable equipment 2 which has a transmitting unit 2a and a receiving unit 2b. The conventional bidirectional wireless system transmits operation commands from the portable equipment 2 to the base station 1 by operating an input device of the portable equipment 2, so that the base station 1 is operated according to the commands.

The base station 1 is to transmit responses to transmission states of the commands or state information of the base station 1 to the portable equipment 2.
That is, the conventional bidirectional wireless system is a weak wireless system capable of performing bidirectional communication (half duplex) adopting the SS.

In the bidirectional wireless system, the portable equipment 2 plays a leading role in operation. The base station 1 receives the commands from the portable equipment 2 by performing intermittent reception with respect to the transmission of the portable equipment 2, and the portable equipment 2 is put into an operation mode only when it is to be operated. Therefore, it is possible to significantly reduced power consumption.

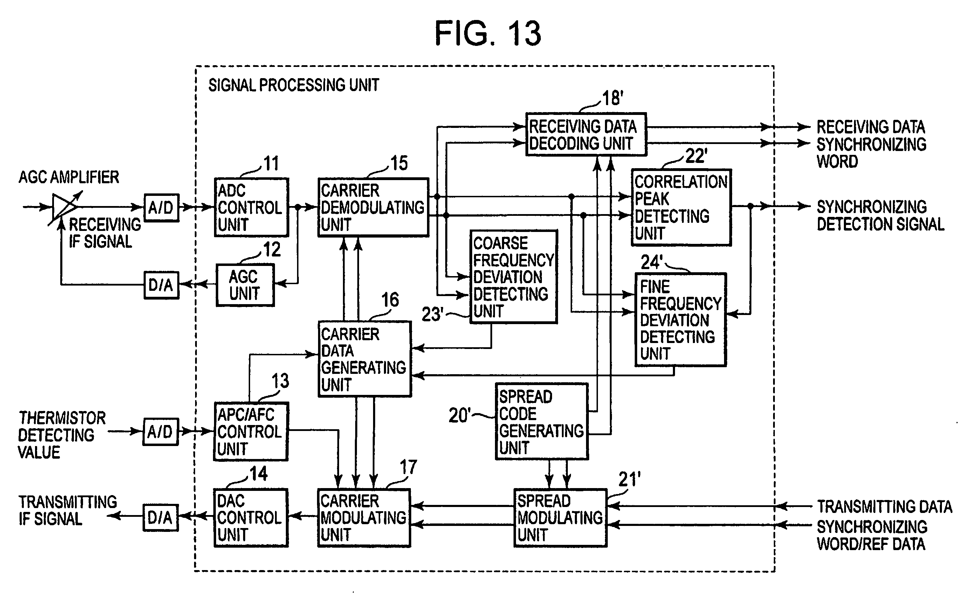

### [Configuration of Conventional Signal Processing Unit: Fig. 13]

A signal processing unit in the wireless communication device will now be described with reference to Fig. 13. Fig. 13 is a block diagram illustrating a configuration of the conventional signal processing unit.
Parts of the conventional signal processing unit will be described in detail.
An ADC (Analog Digital Converter) control unit 11 carries out control to generate a control signal for an A/D converter (designated as "A/D"), and to receive a receiving IF (Intermediate Frequency) signal as an input signal from the A/D converter.

An AGC (Auto Gain Control) unit 12 controls a gain control signal which is outputted to the AGC amplifier in a wireless communication unit, so that the receiving IF signal outputted from the ADC control unit 11 may always be kept to have a predetermined amplitude.

An APC/AFC (Auto Power Control/Auto Frequency Control) control unit 13 receives, as an input thereto, the control signal for monitoring temperature of the wireless communication unit from the A/D converter using a thermistor, and outputs an AFC correction value with respect to the monitored value and an APC correction value to a carrier data generating unit 16 and a carrier modulating unit 17, respectively.
A DAC control unit 14 delivers data, which is modulated in carrier by the carrier modulating unit 17, to the D/A converter.

A carrier demodulating unit 15 performs a processing of removal of an IF carrier component with respect to the receiving IF signal which is outputted from the ADC control unit 11 and further a down sample processing on the afore-processed signal, and then outputs the eventual signal to a receiving data decoding unit 18', a correlation peak detecting unit 22', and a coarse frequency deviation detecting unit 23', respectively.

The carrier data generating unit 16 performs a frequency correction processing according to a frequency deviation value or the like from the coarse frequency deviation detecting unit 23' and a fine frequency deviation detecting unit 24', and generates IF carrier data to be supplied to the carrier demodulating unit 15 and the carrier modulating unit 17.

The carrier modulating unit 17 performs an APC correction processing according to an APC correction request from the APC/AFC control unit 13 with respect to the IF carrier data which is supplied from the carrier data generating unit 16, and also performs the carrier modulation processing with the IF carrier data, with respect to spread modulation processing data which is inputted from a spread modulating unit 21'.
The receiving data decoding unit 18' performs a fine frequency correction of an IF carrier frequency after the synchronization is established, and then detects a synchronizing word and performs a demodulation processing on user data.

A spread code generating unit 20' generates a spread code which is used in performance of a spread modulation and a despread processing. At this stage, two types of spread codes are necessary to be used for synchronizing word/REF (Reference) data and for the user data.
The spread modulating unit 21' performs a differentially-encoding processing on the synchronizing word/REF data and the spread modulation processing on the transmission user data and the synchronizing word/REF data after being differentially encoded.

The correlation peak detecting unit 22' performs a correlation processing on a carrier demodulated data which is outputted from the carrier demodulating unit 15 to perform a correlation peak detection.

The coarse frequency deviation detecting unit 23' detects residual frequency components according to an IF carrier frequency deviation amount between the base station and the portable equipment on the carrier demodulated data which is outputted from the carrier demodulating unit 15, and outputs the frequency deviation amount to the carrier data generating unit 16.

The fine frequency deviation detecting unit 24' performs frequency detection at a high accuracy on the correlation data whose peak has been detected, in order to further decrease the frequency deviation amount, and outputs the fine frequency deviation amount to the carrier data generating unit 16.

In addition, there are disclosed Japanese Patent Application Laid-Open No.08-228172 (Patent Document 1) and Japanese Patent Application Laid-Open No.2001-094462 (Patent Document 2) as relevant prior arts.

Patent Document 1 discloses a communication system that inputs a pseudo peak signal when it is impossible to receive data, so that a frequency deviation is not generated during a period of no signal.
Patent Document 2 discloses a communication system that stores a received frequency tracked to a received signal as past received frequency data, averages the received frequency data and a transmitting frequency value when setting the transmitting frequency, and sets the averaged frequency to the transmitting frequency.

Patent Document 1: Japanese Patent Application Laid-Open No.08-228172
Patent Document 2: Japanese Patent Application Laid-Open No.2001-094462

### Disclosure of the Invention

### Problems to be solved by the Invention

However, in the conventional wireless communication device described above, although there have been studies conducted in order to detect the correlation peak, these still have difficulties in properly and efficiently carrying out the correlation peak detection.

The present invention was made in consideration of the above-mentioned circumstances and, hence, an object of the present invention is to provide a wireless communication device which makes it possible to properly and efficiently carry out the correlation peak detection in a receiving unit carrying out intermittent reception.

### Means for solving the Problems

In order to solve the above-mentioned problems, according to an aspect of the invention, there is provided a wireless communication device which intermittently receives a wireless signal and detects a correlation peak from the received signal, comprising a signal processing unit which includes: a carrier data generating unit configured to generate IF carrier data according to a frequency deviation; a carrier demodulating unit configured to carry out carrier demodulation based on the generated IF carrier data; a correlation peak detecting unit configured to detect the correlation peak of the demodulated carrier demodulation data; a coarse frequency deviation detecting unit configured to detect a coarse frequency deviation from the demodulated carrier demodulation data; a fine frequency deviation detecting unit configured to detect a fine frequency deviation from the detected correlation peak; and a control unit configured to control reception operation in a wireless communication unit, wherein when the correlation peak is detected in a first period in which the correlation peak is detected at a default frequency and a third frequency is detected in a detection period of the fine frequency deviation detecting unit in the first period, the control unit allows the correlation peak detecting unit to carry out correlation peak detection at the default frequency and the third frequency in a second period following the first period.

In the wireless communication device, the control unit may allow the correlation peak detection unit periodically to carry out the correlation peak detection and clock phase error detection at the default frequency and the third frequency after the correlation peak is detected and the synchronization is established.

According to another aspect of the invention, there is provided a wireless communication device which intermittently receives a wireless signal and detects a correlation peak from the received signal, comprising a signal processing unit which includes: a carrier data generating unit configured to generate IF carrier data according to a frequency deviation; a carrier demodulating unit configured to carry out carrier demodulation based on the generated IF carrier data; a correlation peak detecting unit configured to detect the correlation peak of the demodulated carrier demodulation data; a coarse frequency deviation detecting unit configured to detect a coarse frequency deviation from the demodulated carrier demodulation data; a fine frequency deviation detecting unit configured to detect a fine frequency deviation from the detected correlation peak; and a control unit configured to control reception operation in a wireless communication unit, wherein when the correlation peak is not detected in a first period in which the correlation peak is detected at a default frequency and a first frequency is detected in a detection period of the coarse frequency deviation detecting unit in the first period, the control unit allows the correlation peak detecting unit to carry out correlation peak detection at the first frequency in a second period following the first period, and when the correlation peak detecting unit detects the correlation peak and a second frequency is detected in a detection period of the fine frequency deviation detecting unit, the control unit allows the correlation peak detecting unit to carry out the correlation peak detection at the first frequency and the second frequency in a third period following the second period.

In the wireless communication device, the control unit may allow the correlation peak detection unit periodically to carry out the correlation peak detection and clock phase error detection at the first frequency and the second frequency after the correlation peak is detected and the synchronization is established.

According to another aspect of the invention, there is provided a wireless communication device which intermittently receives a wireless signal and detects a correlation peak from the received signal, comprising a signal processing unit which includes: a carrier data generating unit configured to generate IF carrier data according to a frequency deviation; a carrier demodulating unit configured to carry out carrier demodulation based on the generated IF carrier data; a correlation peak detecting unit configured to detect the correlation peak of the demodulated carrier demodulation data; a coarse frequency deviation detecting unit configured to detect a coarse frequency deviation from the demodulated carrier demodulation data; a fine frequency deviation detecting unit configured to detect a fine frequency deviation from the detected correlation peak; and a control unit configured to control reception operation in a wireless communication unit, wherein when the correlation peak is not detected in a first period in which the correlation peak is detected at a default frequency and a first frequency is not detected in a detection period of the coarse frequency deviation detecting unit in the first period, the control unit terminates the intermittent reception control after the first period is terminated.

### Advantage of the Invention

According to the invention, the wireless communication device which intermittently receives the wireless signal and detects the correlation peak from the received signal, comprises the signal processing unit in which the carrier data generating unit generates the IF carrier data according to the frequency deviation; the carrier demodulating unit carries out the carrier demodulation based on the generated IF carrier data; the correlation peak detecting unit detects the correlation peak of the demodulated carrier demodulation data; the coarse frequency deviation detecting unit detects the coarse frequency deviation from the demodulated carrier demodulation data; the fine frequency deviation detecting unit detects the fine frequency deviation from the detected correlation peak; and the control unit controls the reception operation in the wireless communication unit, wherein when the correlation peak is detected in the first period in which the correlation peak is detected at the default frequency and the third frequency is detected in the detection period of the fine frequency deviation detecting unit in the first period, the control unit allows the correlation peak detecting unit to carry out correlation peak detection at the default frequency and the third frequency in a second period following the first period. Therefore, it is possible to properly and efficiently detect the correlation peak while properly correcting the frequency of the correlation peak detection in the intermittent reception.

According to the invention, the wireless communication device which intermittently receives the wireless signal and detects the correlation peak from the received signal, comprises the signal processing unit in which the carrier data generating unit generates the IF carrier data according to the frequency deviation; the carrier demodulating unit carries out carrier demodulation based on the generated IF carrier data; the correlation peak detecting unit detects the correlation peak of the demodulated carrier demodulation data; the coarse frequency deviation detecting unit detects the coarse frequency deviation from the demodulated carrier demodulation data; the fine frequency deviation detecting unit detects the fine frequency deviation from the detected correlation peak; and the control unit controls the reception operation in the wireless communication unit, wherein when the correlation peak is not detected in the first period in which the correlation peak is detected at the default frequency and the first frequency is detected in the detection period of the coarse frequency deviation detecting unit in the first period, the control unit allows the correlation peak detecting unit to carry out correlation peak detection at the first frequency in the second period following the first period, and when the correlation peak detecting unit detects the correlation peak and the second frequency is detected in the detection period of the fine frequency deviation detecting unit, the control unit allows the correlation peak detecting unit to carry out the correlation peak detection at the first frequency and the second frequency in the third period following the second period. Therefore, it is possible to detect the correlation peak while properly and efficiently correcting a frequency of the correlation peak detection in intermittent reception.

According to the invention, the wireless communication device which intermittently receives the wireless signal and detects the correlation peak from the received signal, comprises the signal processing unit in which the carrier data generating unit generates the IF carrier data according to the frequency deviation; the carrier demodulating unit carries out the carrier demodulation based on the generated IF carrier data; the correlation peak detecting unit detects the correlation peak of the demodulated carrier demodulation data; the coarse frequency deviation detecting unit detects the coarse frequency deviation from the demodulated carrier demodulation data; the fine frequency deviation detecting unit detects the fine frequency deviation from the detected correlation peak; and the control unit controls the reception operation in the wireless communication unit, wherein when the correlation peak is not detected in the first period in which the correlation peak is detected at the default frequency and the first frequency is not detected in the detection period of the coarse frequency deviation detecting unit in the first period, the control unit terminates the intermittent reception control after the first period is terminated. Therefore, it is possible to reduce power consumption in the intermittent reception.

### Brief Description of the Drawings

[Fig. 1] Fig. 1 is a block diagram illustrating a configuration of a signal processing unit according to an embodiment of the invention.
[Fig. 2] Fig. 2 is a block diagram illustrating a configuration of a carrier demodulating unit.
[Fig. 3] Fig. 3 is a block diagram illustrating a configuration of a carrier data generating unit.
[Fig. 4] Fig. 4 is a block diagram illustrating a configuration of a former part of a receiving data demodulating unit.
[Fig. 5] Fig. 5 is a block diagram illustrating a configuration of a latter part of a receiving data demodulating unit.
[Fig. 6] Fig. 6 is a block diagram illustrating a configuration of a matched filter unit.
[Fig. 7] Fig. 7 is a block diagram illustrating a configuration of a spread code generating unit.
[Fig. 8] Fig. 8 is a block diagram illustrating a configuration of a spread modulating unit.
[Fig. 9] Fig. 9 is a block diagram illustrating a configuration of a correlation peak detecting unit.
[Fig. 10] Fig. 10 is a block diagram illustrating a configuration of a coarse frequency deviation detecting unit.
[Fig. 11] Fig. 11 is a block diagram illustrating a configuration of a fine frequency deviation detecting unit.
[Fig. 12] Fig. 12 is a schematic diagram illustrating a conventional bidirectional wireless system.
[Fig. 13] Fig. 13 is a block diagram illustrating a configuration of a conventional signal processing unit.
[Fig. 14] Fig. 14 is a diagram illustrating outline of a specification of an intermittent reception and a data format.
[Fig. 15] Fig. 15 is a timing chart illustrating base timing.
[Fig. 16] Fig. 16 is a chart illustrating timing when a correlation peak is detected at the frequency F0.
[Fig. 17] Fig. 17 is a chart illustrating timing when a correlation peak is detected at the frequency F1.
[Fig. 18] Fig. 18 is a chart illustrating timing when there is no detection of correlation peak at frequency F0 and no detection of frequency F1.
[Fig. 19] Fig. 19 is a flow chart illustrating a correlation peak detecting processing.

### Description of Reference Numerals and Signs

1: wireless communication device (base station)
2: wireless communication device (portable equipment)
11: ADC control unit
12: AGC unit
13: APC/AFC control unit
14: DAC control unit
15: carrier demodulating unit
16: carrier data generating unit
17: carrier modulating unit
18, 18': receiving data decoding unit
19: matched filter unit
20, 20': spread code generating unit
21, 21': spread modulating unit
22, 22': correlation peak detecting unit
23, 23': coarse frequency deviation detecting unit
24, 24': fine frequency deviation detecting unit
25: control unit
151: IF carrier demodulation processing unit
152: high-frequency component removing unit
153: down sampling unit
161: AFC adjusting unit
162: index counter
163: address decoder
164: sine wave table
181: decimation filter
182: down sampling unit
183: low-frequency component removing unit
184: despread processing unit
185: division accumulation processing unit
186: partial correlation calculating processing unit
187: accumulation processing unit
188: delay detecting unit
189: code bit extracting unit
191: RAM read address generating unit
192: carrier demodulated data storing unit
193: spread code dividing unit
194: despread processing unit
195: accumulation processing unit
196: partial correlation calculating processing unit
197: full addition processing unit
198: shift register
201: control unit
202: code generation parameter table
203: code generating unit
204: code storing unit
205: SEL
211: differentially-encoding processing unit
212, 213, 214: spread modulation processing unit
221: 1-bit interval maximum peak position detecting unit
222: maximum peak position comparing unit
223: symbol synchronizing signal generating unit
224: free running counter
231: noise removing unit
232: down sampling unit
233: FFT operation processing unit
234: operation result accumulation processing unit
235: maximum peak position detecting unit
241: FFT operation processing unit
242: maximum peak position detecting unit

### Best Mode for Carrying out the Invention

An embodiment of the invention will now be described with reference to the accompanying drawings.

### [Outline of Embodiment]

In the invention, a wireless communication device which intermittently receives a wireless signal and detects a correlation peak from the received signal, comprises a signal processing unit which includes: a carrier data generating unit configured to generate IF carrier data according to a frequency deviation; a carrier demodulating unit configured to carry out carrier demodulation based on the generated IF carrier data; a correlation peak detecting unit configured to detect the correlation peak of the demodulated carrier demodulation data; a coarse frequency deviation detecting unit configured to detect a coarse frequency deviation from the demodulated carrier demodulation data; a fine frequency deviation detecting unit configured to detect a fine frequency deviation from the detected correlation peak; and a control unit configured to control reception operation in a wireless communication unit, wherein when the correlation peak is detected in a first period in which the correlation peak is detected at a default frequency and a third frequency is detected in a detection period of the fine frequency deviation detecting unit in the first period, the control unit allows the correlation peak detecting unit to carry out correlation peak detection at a frequency made by adding the third frequency to the default frequency and the third frequency in a second period following the first period. Therefore, it is possible to detect the correlation peak while properly and efficiently correcting a frequency of the correlation peak detection in intermittent reception.

Further, in the invention, a wireless communication device which intermittently receives a wireless signal and detects a correlation peak from the received signal, comprises a signal processing unit which includes: a carrier data generating unit configured to generate IF carrier data according to a frequency deviation; a carrier demodulating unit configured to carry out carrier demodulation based on the generated IF carrier data; a correlation peak detecting unit configured to detect the correlation peak of the demodulated carrier demodulation data; a coarse frequency deviation detecting unit configured to detect a coarse frequency deviation from the demodulated carrier demodulation data; a fine frequency deviation detecting unit configured to detect a fine frequency deviation from the detected correlation peak; and a control unit configured to control reception operation in a wireless communication unit, wherein when the correlation peak is not detected in a first period in which the correlation peak is detected at a default frequency and a first frequency is detected in a detection period of the coarse frequency deviation detecting unit in the first period, the control unit allows the correlation peak detecting unit to carry out correlation peak detection at the first frequency in a second period following the first period, and when the correlation peak detecting unit detects the correlation peak and a second frequency is detected in a detection period of the fine frequency deviation detecting unit, the control unit allows the correlation peak detecting unit to carry out the correlation peak detection at the first frequency and the second frequency in a third period following the second period. Therefore, it is possible to detect the correlation peak while properly and efficiently correcting a frequency of the correlation peak detection in intermittent reception.

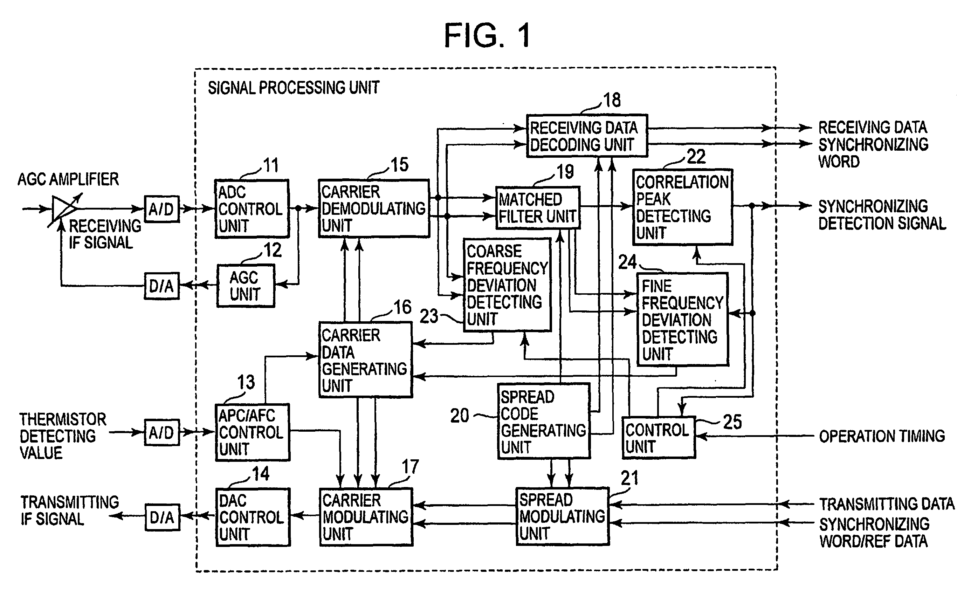

### [Overall configuration of Signal Processing Unit: Fig. 1]

The wireless communication device according to the embodiment of the invention is provided with a signal processing unit to be described later. In addition, the wireless communication device is provided with a receiving unit, a transmitting unit, and other circuits.
The signal processing unit according to the embodiment of the invention will now be described with reference to Fig. 1. Fig. 1 is a block diagram illustrating a configuration of the signal processing unit according to the embodiment of the invention.
As shown in Fig. 1, the signal processing unit according to the embodiment of the invention includes an ADC control unit 11, an AGC unit 12, an APC/AFC control unit 13, a DAC control unit 14, a carrier demodulating unit 15, a carrier data generating unit 16, a carrier modulating unit 17, a receiving data decoding unit 18, a matched filter unit 19, a spread code generating unit 20, a spread modulating unit 21, a correlation peak detecting unit 22, a coarse frequency deviation detecting unit 23, a fine frequency deviation detecting unit 24, and a control unit 25.

### [Parts]

Next, each part of the signal processing unit will now be described with reference to the accompanying drawings.

### [ADC Control Unit 11]

The ADC control unit 11 reads a receiving IF (Intermediate Frequency) signal from an A/D converter IC (Integrated Circuit) and outputs the received signal to the carrier demodulating unit 15.
Further, the ADC control unit 11 generates and outputs a control signal to the A/D converter IC.

### [AGC Unit 12]

The AGC unit 12 outputs a control signal for controlling a gain of the AGC amplifier in order to always be in a predetermined amplitude with respect to the received signal outputted from the ADC control unit 11.

### [APC/AFC Control Unit 13]

The APC/AFC control unit 13 generates and outputs a control signal to the A/D converter IC in order to monitor a temperature of the wireless communication unit (RF [Radio Frequency] unit) by using a thermistor.
Further, the APC/AFC control unit 13 supplies an AFC correction value and an APC correction value to the carrier data generating unit 16 and the carrier modulating unit 17, respectively, according to the monitored value from the A/D converter IC.
Here, the APC means an automatic-transmission power control, and the AFC means an automatic frequency control, respectively.

### [DAC Control Unit 14]

The DAC control unit 14 delivers data, which is modulated in carrier by the carrier modulating unit 17, to the D/A converter IC.
Further, the DAC control unit 14 generates and outputs a control signal to the D/A converter IC.

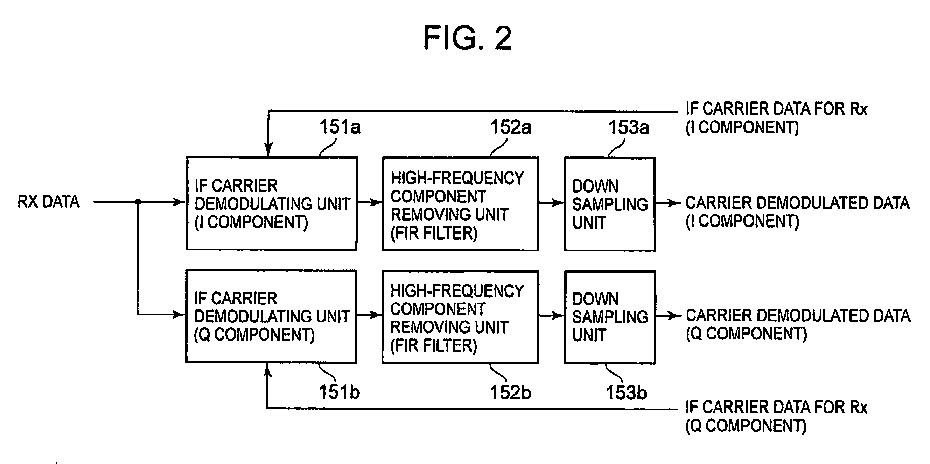

### [Carrier Demodulating Unit 15: Fig. 2]

The carrier demodulating unit 15 will now be described with reference to Fig. 2. Fig. 2 is a block diagram illustrating a configuration of the carrier demodulating unit.
The carrier demodulating unit 15 performs a processing of removal of an IF carrier component with respect to the receiving IF signal based on the IF carrier data which is inputted from the carrier data generating unit 16, and further downsamples the receiving IF signal from 512 kHz sampling (strictly speaking, 524,288 Hz) to 256 kHz sampling (strictly speaking, 262,144 Hz).

As shown in Fig. 2, the carrier demodulating unit 15 includes: an IF carrier demodulating unit 151a which receives a receiving data (RX data) and demodulates the receiving data with an IF carrier with respect to an in-phase component (I component); an IF carrier demodulating unit 151b which demodulates the receiving data with the IF carrier with respect to an orthogonal component (Q component); a high-frequency component removing unit 152a which removes high-frequency components using an FIR (Finite Impulse Response) filter with respect to the I component demodulated with the IF carrier; a high-frequency component removing unit 152b which removes high-frequency components using an FIR filter with respect to the Q component demodulated with the IF carrier; a down sampling unit 153a which outputs I-component data demodulated with the carrier by downsampling the I component removed with the high-frequency components; and a down sampling unit 153b which outputs Q-component data demodulated with the carrier by downsampling the Q component removed with the high-frequency components.

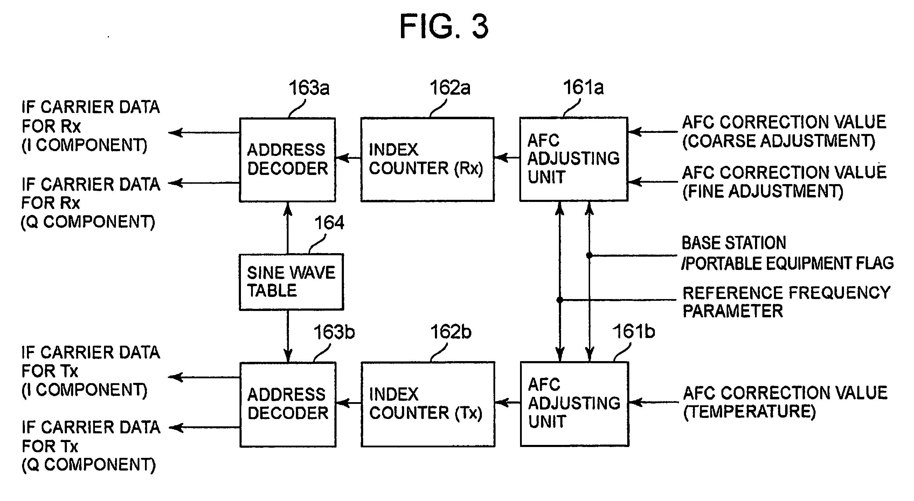

### [Carrier Data Generating Unit 16: Fig. 3]

The carrier data generating unit 16 will now be described with reference to Fig. 3. Fig. 3 is a block diagram illustrating a configuration of the carrier data generating unit.
The carrier data generating unit 16 generates IF carrier data which is supplied to the carrier modulating unit 17 and the carrier demodulating unit 15.
The two kinds of IF carrier data are generated with a 90° different phase with respect to transmission and reception.
Further, the carrier data generating unit 16 performs a frequency correction processing on frequency deviation detection data from the coarse frequency deviation detecting unit 23 and the fine frequency deviation detecting unit 24, and AFC correction data from the APC/AFC control unit 13.

Specifically, as shown in Fig. 3, the carrier data generating unit 16 includes: an AFC adjusting unit 161a which performs an AFC adjustment with respect to an AFC correction value (coarse adjustment) inputted from the coarse frequency deviation detecting unit 23 and an AFC correction value (fine adjustment) inputted from the fine frequency deviation detecting unit 24 based on a base station/portable equipment flag inputted and a reference frequency parameter; an AFC adjusting unit 161b which performs the AFC adjustment with respect to the AFC correction value (temperature) inputted from the APC/AFC control unit 13 based on the base station/portable equipment flag inputted and the reference frequency parameter; an index counter (Rx) 162a which counts reception indexes with respect to data inputted from the AFC adjusting unit 161a; an index counter (Tx) 162b which counts transmission indexes with respect to data inputted from the AFC adjusting unit 161b; an address decoder 163a which decodes an address by the use of a count value of the index counter 162a based on a sine wave table 164 and outputs IF carrier data for Rx of the I component and IF carrier data for Rx of the Q component; and an address decoder 163b which decodes an address by the use of a count value of the index counter 162b based on the sine wave table 164 and outputs IF carrier data for Tx of the I component and IF carrier data for Tx of the Q component.

### [Carrier Modulating Unit 17]

The carrier modulating unit 17 performs an APC correction processing according to an APC correction request from the APC/AFC control unit 13 with respect to the IF carrier data supplied from the carrier data generating unit 16.
Further, the carrier modulating unit 17 performs a carrier modulation by the IF carrier data with respect to spread modulating processing data (user data, synchronizing word/REF data) inputted from the spread modulating unit 21.
The IF carrier data is data which is shifted in phase by 90° with respect to the user data and the synchronizing word/REF data.
Further, the carrier modulating unit 17 performs an addition processing in which each data subjected to the carrier modulation is added.

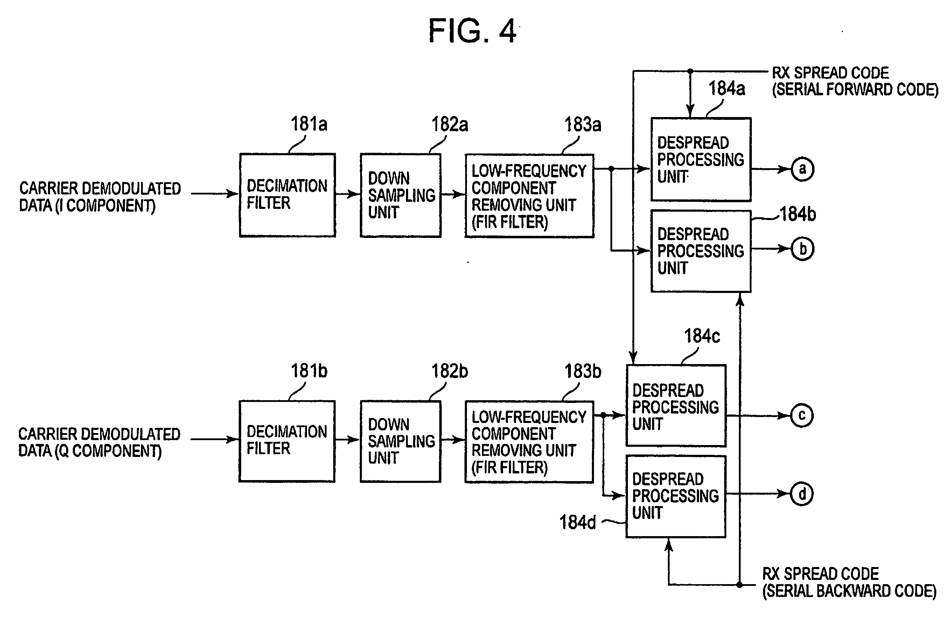

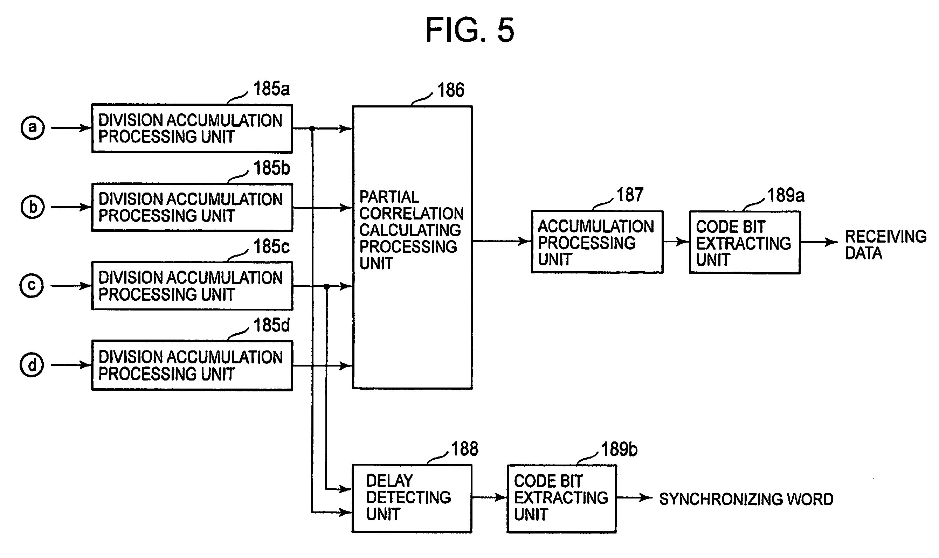

### [Receiving Data Decoding Unit 18: Fig. 4 and Fig. 5]

Next, the receiving data decoding unit 18 will now be described with reference to Figs. 4 and 5. Fig. 4 is a block diagram illustrating a configuration of a former part of the receiving data decoding unit. Fig. 5 is a block diagram illustrating a configuration of a latter part of the receiving data decoding unit. (a) to (d) in Fig. 4 are connected to (a) to (d) in Fig. 5, respectively.
The receiving data decoding unit 18 establishes the synchronization and performs a fine correction processing of an IF carrier frequency, and then detects a synchronizing word and decodes the user data.
Since the carrier demodulated data is data that is 8 times over-sampled (the carrier demodulated data is sampling data of 262,144 Hz with respect to a chip rate of 32,768 Hz), the carrier demodulated data is downsampled to a sampling data of 32,768 Hz after decimation filtering (moving average filter with 8 taps).
After downsampling, the receiving data demodulating unit performs a processing of removal of low-frequency components by an HPF (High Pass Filter=FIR filter).

Specifically, as shown in Figs. 4 and 5, the receiving data decoding unit 18 includes: a decimation filter 181a which filters I-component data modulated in carrier by the use of the moving average filter with 8 taps; a down sampling unit 182a which downsamples the output of the decimation filter 181a; a low-frequency component removing unit 183a which removes low-frequency components with respect to the output of the down sampling unit 182a by using the FIR filter; a decimation filter 181b which filters Q-component data demodulated in carrier by using the moving average filter with 8 taps; a down sampling unit 182b which downsamples the output of the decimation filter 181b; a low-frequency component removing unit 183b which removes low-frequency components with respect to the output of the down sampling unit 182b by using the FIR filter; a despread processing unit 184a which despreads the output of the low-frequency component removing unit 183a by an RX spread code (serial forward code); a despread processing unit 184b which despreads the output of the low-frequency component removing unit 183a by an RX spread code (serial backward code); a despread processing unit 184c which despreads the output of the low-frequency component removing unit 183b by the RX spread code (serial forward code); a despread processing unit 184d which despreads the output of the low-frequency component removing unit 183b by the RX spread code (serial backward code); division accumulation processing units 185a to 185d which divide and accumulate the output of each of the despread processing units 184a to 184d; a partial correlation calculating processing unit 186 which calculates a partial correlation by adding the outputs from the division accumulation processing units 185a to 185d; an accumulation processing unit 187 which accumulates the output of the partial correlation calculating processing unit 186; a code bit extracting unit 189a which extracts a code bit from the output of the accumulation processing unit 187 and output the receiving data; a delay detecting unit 188 which receives the outputs from the division accumulation processing units 185a and 185c and performs a delay detection; and a code bit extracting unit 189b which extracts the code bit from the output of the delay detecting unit 188 and outputs the synchronizing word.

The purpose of the receiving data decoding unit 18 performing the HPF processing with the low-frequency component removing units 183a and 183b is to remove interference wave components when continuous-wave (CW) interference waves are inputted in a signal bandwidth.
Such being the case in the signal bandwidth, signal components are also removed, but there is no degradation in sensitivity by setting a cutoff frequency of the HPF to not affect the signal bandwidth.

In the signal processing unit, the cutoff frequency of the HPF is set to about 2.6 kHz with respect to the chip rate of 32,768 Hz (≈ signal bandwidth).
After the receiving data decoding unit 18 performs the filtering processing, the despread processing and the accumulation processing are performed by a sliding correlation processing.

The IF carrier frequency deviation amount is reduced to accuracy within ±32 Hz by the fine frequency deviation detection and the correction. However, when a chip rate is 32,768 Hz and 512 chip/bit, a bit rate is 64 bps and an allowable value of residual frequency components after the carrier demodulation becomes ±16 Hz. Therefore, the accuracy is not yet sufficient.

Therefore, a division correlation processing is performed in the correlation processing (sliding correlation processing). Although two divisions are enough in theory, the correlation processing is made of four divisions in the signal processing unit in consideration of a margin.
As to be described below in connection with the spread modulating unit 21 in detail, decoding of the user data depends on a relative position relationship with the synchronizing word/REF data.
Further, the synchronizing word is detected from the synchronizing word/REF data component at the same time. The detection is performed by the delay detecting unit. However, since the division correlation processing is being performed, 2-stage delay detecting processing comes to be performed instead of normal delay detecting processing.

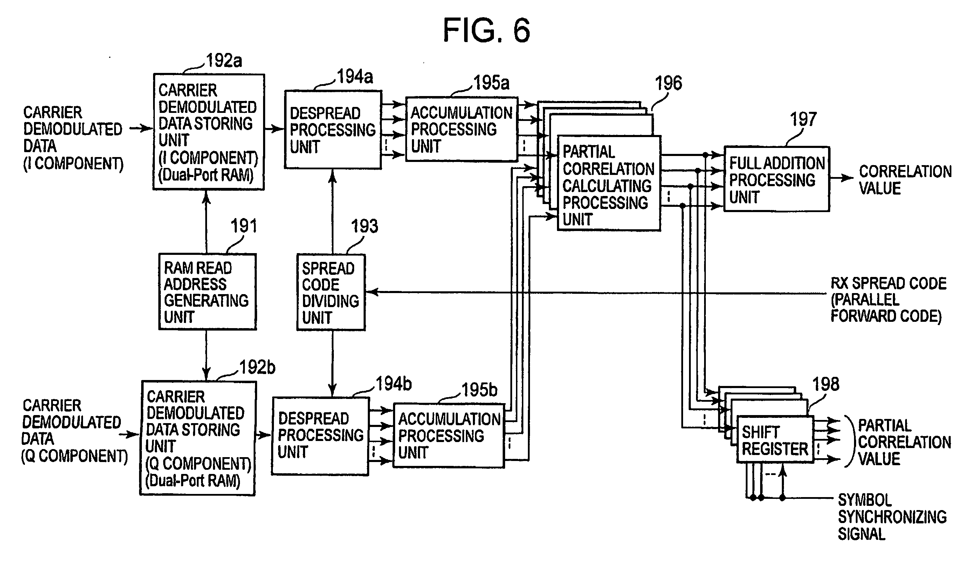

### [Matched Filter Unit 19: Fig. 6]

Next, the matched filter unit 19 will now be described with reference to Fig. 6. Fig. 6 is a block diagram illustrating a configuration of the matched filter unit.
The matched filter unit 19 performs the despread processing and further the full addition processing as the correlation detecting processing by matched-filtering with respect to the carrier demodulated data.

Specifically, as shown in Fig. 6, the matched filter unit 19 includes: a carrier demodulated data storing unit 192a formed of a dual-port RAM (Random Access Memory) which stores I-component data modulated in carrier according to the address outputted from the RAM read address generating unit 191; a carrier demodulated data storing unit 192b formed of a dual-port RAM which stores Q-component data modulated in carrier according to an address outputted from the RAM read address generating unit 191; a spread code dividing unit 193 which divides and outputs a spread code; a despread processing unit 194a which despreads the carrier modulated data outputted from the carrier demodulated data storing unit 192a by the use of the divided spread code; a despread processing unit 194b which despreads the carrier modulated data outputted from the carrier demodulated data storing unit 192b by using the divided spread code; an accumulation processing unit 195a which performs the accumulating operation with respect to the output of the despread processing unit 194a; an accumulation processing unit 195b which performs the accumulating operation with respect to the output of the despread processing unit 194b; a partial correlation calculating processing unit 196 which calculates the outputs of the accumulation processing units 195a and 195b by being partially correlated; a full addition processing unit 197 which fully adds the output of the partial correlation calculating processing unit 196; and a shift register 198 which temporarily stores the output of the partial correlation calculating processing unit 196 and outputs as a partial correlation detection value by the symbol synchronizing signal.

In implementing the matched filtering, actually, dual-port RAMs are used for the carrier demodulated data storing units 192a and 192b so that the matched filter unit 19 performs the pipeline processing by a high-speed clock processing.
The correlation detected data (correlation detected value) processed in the correlation detection is supplied to the correlation peak detecting unit 22.
When detecting the peak, the correlation peak detecting unit 22 makes this detected signal (symbol synchronizing signal) to be used as a trigger and latches the correlation detected data by the shift register 198, which is supplied to the fine frequency deviation detecting unit 23.

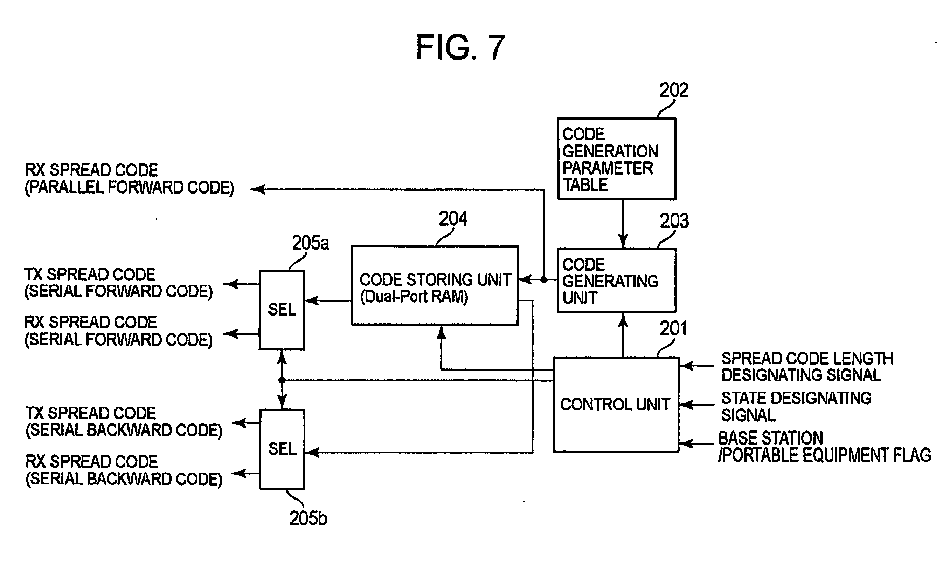

### [Spread Code Generating Unit 20: Fig. 7]

Next, the spread code generating unit 20 will now be described with reference to Fig. 7. Fig. 7 is a block diagram illustrating a configuration of the spread code generating unit.
The spread code generating unit 20 generates a spread code for the spread modulation and the despread processing.

Specifically, as shown in Fig. 7, the spread code generating unit 20 includes: a control unit 201 which receives a spread code length designating signal, a state designating signal and a base station/portable equipment flag, and outputs a control signal; a code generating unit 203 which generates a spread code by the control signal from the control unit 201 and a parameter from a code generation parameter table 202 and outputs the RX spread code (parallel forward code); a code storing unit 204 formed of a dual-port RAM which receives and stores the spread code from the code generating unit 203 by the control signal from the control unit 201 and further outputs the stored spread code; a selector (SEL) 205a which outputs the code from the code storing unit 204 by selecting a TX spread code (serial forward code) or an RX spread code (serial forward code) according to the control signal from the control unit 201; and a selector (SEL) 205b which outputs the code from the code storing unit 204 by selecting the TX spread code (serial backward code) or the RX spread code (serial backward code) according to the control signal from the control unit 201.

The spread code generating unit 20 generates the spread code in a length of 512 chips at starting up the system, which is stored to the code storing unit 204.
The two kinds of spread codes to be used are necessary for the synchronizing word/REF data and for the user data. It is also possible for these two kinds of codes to be generated from each of the parameters, but in the signal processing unit, a code generated by one kind of parameter is used, which is arranged forward and backward so as to be used in a quite different code.

That is, the SEL 205a receives the TX spread code (serial forward code) or the RX spread code (serial forward code) from the code storing unit 204, and the SEL 205b receives the TX spread code (serial backward code) or the RX spread code (serial backward code) by reversing the same data from the code storing unit 204, and selects and outputs any one of both according to the control signal from the control unit 201.

Specifically, when addresses for reading out the codes stored in the RAM are read out sequentially from 0 to 511 and when read out sequentially from 511 to 0, the different codes are utilized. Therefore, it is possible to reduce storage capacity of the RAM down to 1/2 capacity.

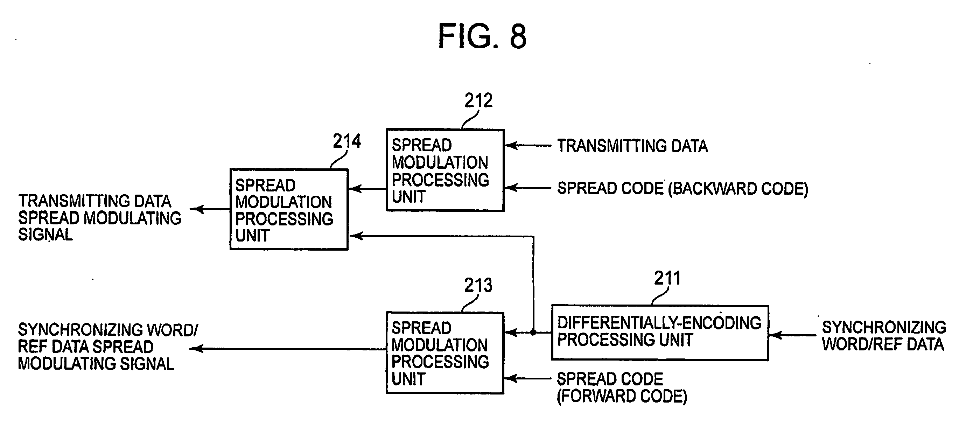

### [Spread Modulating Unit 21: Fig. 8]

Next, the spread modulating unit 21 will now be described with reference to Fig. 8. Fig. 8 is a block diagram illustrating a configuration of the spread modulating unit.
The spread modulating unit 21 performs a differentially-encoding processing on the synchronizing word/REF data, and performs a spread modulation processing on the synchronizing word/REF data subjected to the differentially-encoding processing and the transmission user data.

Specifically, as shown in Fig. 8, the spread modulating unit 21 includes: a differentially-encoding processing unit 211 which receives the synchronizing word/REF data and performs the differentially-encoding processing; a spread modulation processing unit 212 which receives the transmitting data and the spread code (backward code) and performs the spread modulation processing; a spread modulation processing unit 213 which receives the data encoded differentially from the differentially-encoding processing unit 211 and the spread code (forward code), performs the spread modulation processing, and outputs a synchronizing word/REF data spread modulating signal; and a spread modulation processing unit 214 which receives the signal modulated diffusely from the spread modulation processing unit 212 and the data encoded differentially from the differentially-encoding processing unit 211, performs the spread modulation processing, and outputs a transmitting data spread modulating signal.

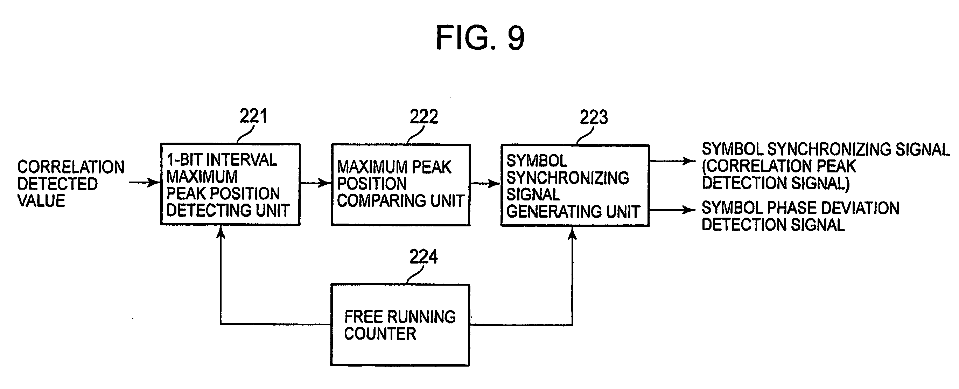

### [Correlation Peak Detecting Unit 22: Fig. 9]

Next, the correlation peak detecting unit 22 will now be described with reference to Fig. 9. Fig. 9 is a block diagram illustrating a configuration of the correlation peak detecting unit.
As shown in Fig. 9, the correlation peak detecting unit 22 includes: a 1-bit interval maximum peak position detecting unit 221 which receives the correlation detected value from the matched filter unit 19 and detects a maximum peak position in a 1-bit interval as a counter value; a maximum peak position comparing unit 222 which compares the counter value at the detected maximum peak position with a counter value at a previous maximum peak position and outputs the comparison result; a symbol synchronizing signal generating unit 223 which outputs a symbol synchronizing signal (correlation peak detection signal: synchronizing detection signal) to the outside and the control unit 25 if the correlation peak is detected from the received comparison result, and outputs a symbol phase deviation detection signal with respect to the symbol phase deviation to the fine frequency deviation detecting unit 24; and a free running counter 224 which outputs a free running counter value.

The correlation peak detecting unit 22 performs correlation peak detection according to the following sequence with respect to the correlation value detected from the matched filter unit 19.
First, the free running counter 224 is started up from the start of a detection processing.
The free running counter 224 is a counter of 4,096=12 bit in 256 kHz/1-bit length=512 chip/bit.

Second, the 1-bit interval maximum peak position detecting unit 221 detects the maximum correlation value for every 1-bit interval from the start of the detection processing, and stores a counter value in a memory whenever the maximum value is updated.

Third, when the detection of the maximum value is terminated in 2-bit intervals from the start of the detection processing, the maximum peak position comparing unit 222 compares counter values of the correlation maximum value in the 2-bit intervals for every interval, and outputs the comparison result to the symbol synchronizing signal generating unit 223.

The symbol synchronizing signal generating unit 223 determines that the comparison result is a correlation peak in high reliability when the deviation is in a predetermined range (about ± 3 to 4 counts), and delivers the symbol synchronizing signal (correlation peak detection signal).

Further, even though the original signal is not received (only noise is received), for example, when the symbol synchronizing signal generating unit 223 detects the peak in the counter values in a range of ±4 counts, there is an error in 262,144 receptions because the probability becomes (8/4,096)^2=1/262,144. Specifically, the shorter the chip length becomes, the higher the probability of the error in detection becomes.
Therefore, the signal processing unit detects the peak when the counter values are within a predetermined range in 3-bit continuation instead of 2-bit continuation. The probability of error in detection becomes (8/4,096)^3=1/134,217,728.

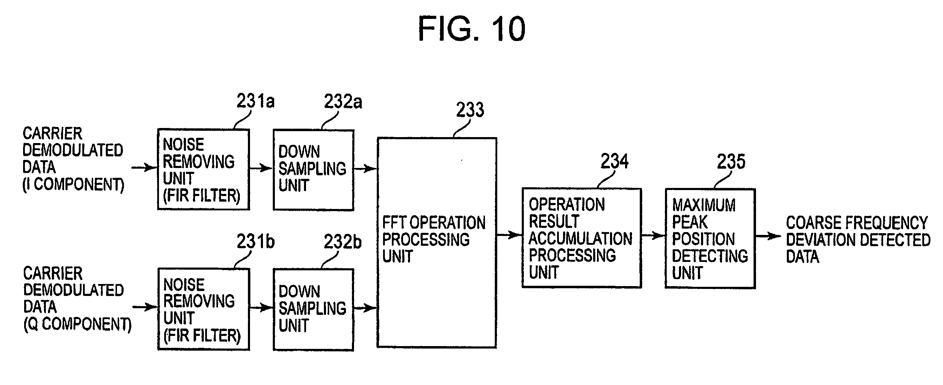

### [Coarse Frequency Deviation Detecting Unit 23: Fig. 10]

Next, the coarse frequency deviation detecting unit 23 will now be described with reference to Fig. 10. Fig. 10 is a block diagram illustrating a configuration of the coarse frequency deviation detecting unit.
The coarse frequency deviation detecting unit 23 performs a processing of removal of noises with an LPF (Low Pass Filter) with respect to the carrier demodulated data to be downsampled, accumulates the data by performing the FFT operation, detects the maximum peak position, and outputs coarse frequency deviation detected data.

As shown in Fig. 10, the coarse frequency deviation detecting unit 23 includes: a noise removing unit 231a which receives I-component data demodulated in carrier and performs a processing of removal of noises by using the FIR filter as the LPF; a noise removing unit 231b which receives Q-component data demodulated in carrier and performs a processing of removal of noises by using the FIR filter as the LPF; a down sampling unit 232a which downsamples the I component removed from noises; a down sampling unit 232b which downsamples the Q component removed from noises; an FFT operation processing unit 233 which performs the FFT operation with respect to the downsampled I component and the downsampled Q component; an operation result accumulation processing unit 234 which accumulates results of the FFT operation; and a maximum peak position detecting unit 235 which detects the maximum peak position from the accumulated results.

In the down sampling units 232a and 232b, the data removed from noises is downsampled with 32,768 Hz.
Residual frequency components according to the IF carrier frequency deviation amount between the base station and the portable equipment are detected with respect to the downsampled data.
The detection of the residual frequency components is performed by a 32-point FFT operation. Therefore, the accuracy of the detection frequency becomes 1,024 Hz.

In the signal processing unit, the peak detection is performed after the several detection results are accumulated in order to increase the detection accuracy.
One period of operation is 32/32,768≈1 msec, and the accumulation is able to be made up to 32 periods.
When the 32 periods of accumulation are performed, the detection sensitivity increases up to about 15 dB in theory.
The detected coarse frequency deviation amount is supplied to the carrier data generating unit 16.

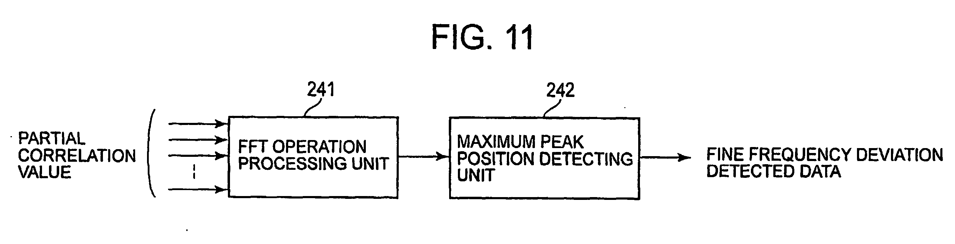

### [Fine Frequency Deviation Detecting Unit 24: Fig. 11]

Next, the fine frequency deviation detecting unit 24 will now be described with reference to Fig. 11. Fig. 11 is a block diagram illustrating a configuration of the fine frequency deviation detecting unit.
The fine frequency deviation detecting unit 24 detects a frequency in high accuracy in order to further reduce the frequency deviation amount for the purpose of reduction in division loss (sensitivity degradation due to division) by the division correlation processing before the receiving data decoding unit 18 carries out the data decoding processing.

As shown in Fig. 11, the fine frequency deviation detecting unit 24 includes an FFT operation processing unit 241 which receives the partial correlation detected value and performs the FFT operation and a maximum peak position detecting unit 242 which detects the maximum peak position from the FFT operation results and outputs fine frequency deviation detected data.

The FFT operation processing unit 241 performs the same 32-point FFT operation as that of the FFT operation processing unit 233 of the coarse frequency detecting unit 23. However, in this case, 32-divided correlation processing data when the correlation peak is detected is used for performing operation.

After the coarse frequency deviation is corrected, residual deviation components of ±512 Hz at maximum also remains in the carrier demodulated data. The residual deviation components appear in the 32-divided correlation detected data when the peak is detected.
For this reason, it is possible to detect frequencies of the residual deviation amount by performing the FFT operation with respect to the corresponding correlation data (32 division * I, Q component=64 points) when the peak is detected.

The detection accuracy at that time becomes 64 Hz, since a sampling period of one division amount is 16/32,768≈0.5 msec, Δf=1/0.5 msec*32=64 Hz.
The obtained fine frequency deviation value is supplied to the carrier data generating unit 16.
Further, the fine frequency deviation detecting unit 24 is able to be commonly used thanks to having the same 32-point FFT operation circuit as that of the coarse frequency deviation detecting unit 23.

### [Control Unit 25]

The control unit 25 receives the synchronous detection signal from the correlation peak detecting unit 22, performs a symbol synchronizing processing, and controls operation timing of the correlation peak detecting unit 22 and the coarse frequency deviation detecting unit 23 according to an external input.
In addition, the control unit 25 controls each part of the receiving system and performs following processing in order to perform the intermittent reception.

### [Flow of Reception Processing]

Hereinafter, a flow of the reception processing will now be described briefly.
First, in the start of reception processing, a carrier demodulating processing is performed by the carrier demodulating unit 15 through the ADC control unit 11.
Second, carrier demodulating processing data is supplied to the coarse frequency deviation detecting unit 23 and the matched filter unit 19. The coarse frequency deviation detecting unit 23 detects the coarse frequency deviation amount, while the matched filter unit 19 and the correlation peak detecting unit 22 perform a correlation detecting processing and a correlation peak detecting processing, respectively.

Third, when the coarse frequency deviation is detected, the carrier data generating unit 16 and the carrier demodulating unit 15 correct the deviation amount, and perform again the correlation peak detecting processing.
Fourth, when detecting the correlation peak, the correlation peak detecting unit 22 supplies each detected value (32 division amount, I and Q components; 64 points in total) of the division correlation, which corresponds to the peak value, to the fine frequency deviation detecting unit 24, and detects the fine frequency deviation amount.

Fifth, the carrier data generating unit 16 and the carrier demodulating unit 15 correct again the IF carrier frequency from the detection result of the fine frequency deviation amount, and then the receiving data decoding unit 18 detects the synchronizing word and further decodes the receiving data.
The above-mentioned flow is outline of the reception processing in the signal processing unit.

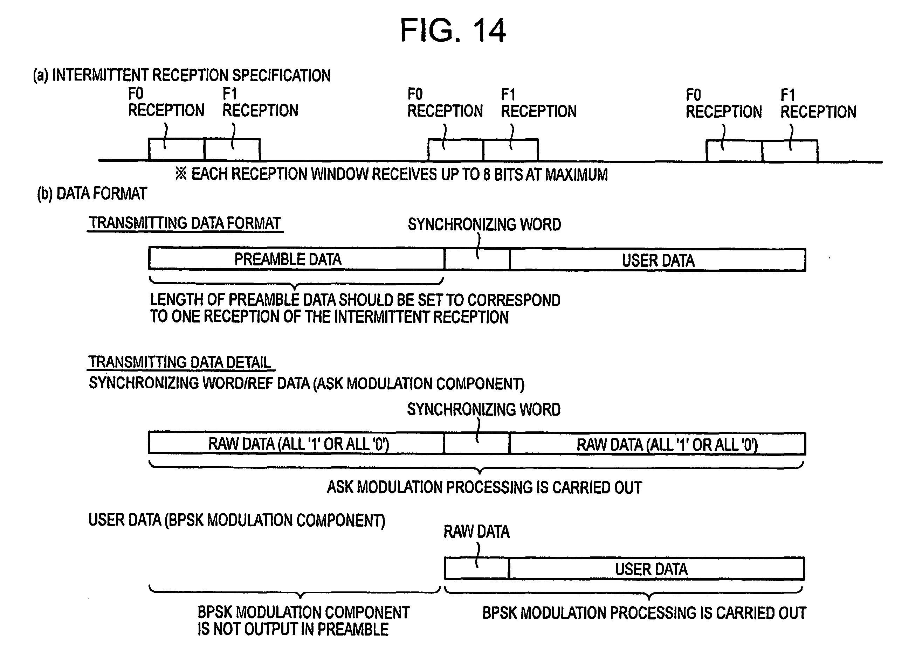

In the second processing in the flow of reception processing, the intermittent reception processing is realized in the correlation peak detection processing in order to reduce the power consumption.
Specifically, as shown in (a) of Fig. 14, when the wireless signal is on, the control unit 25 carries out the correlation peak detection at the default frequency F0 of the IF carrier frequency during a predetermined period. When the correlation peak is not detected in the period, the control unit 25 carries out the correlation peak detection at the current carrier frequency F1 during a predetermined period. When the correlation peak is not detected at the frequencies F0 and F1, the control unit 25 terminates the reception processing, and when the next wireless signal is on, the control unit 25 carries out the correlation peak detection at the frequencies F0 and F1.
Fig. 14 is outline of an intermittent reception specification and a data format.

Further, (b) of Fig. 14 is a transmitting data format and transmitting data details.
The transmitting data includes preamble data, synchronizing word, and user data. Length of the preamble data is set to correspond to once the intermittent reception.
Further, the synchronizing word/REF data in the transmitting data includes raw data of all 0 or 1, synchronizing word, and raw data. The user data includes raw data and user data.
Further, the synchronizing word/REF data is ASK (Amplitude Shift Keying) modulated, and the user data is BPSK (Bi-Phase Shift Keying) modulated.

### [F0/F1 Reception Timing Chart]

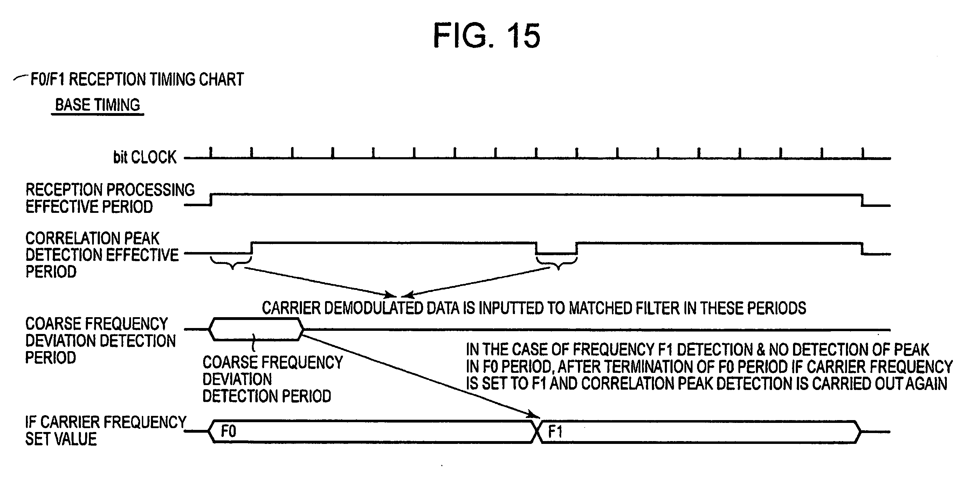

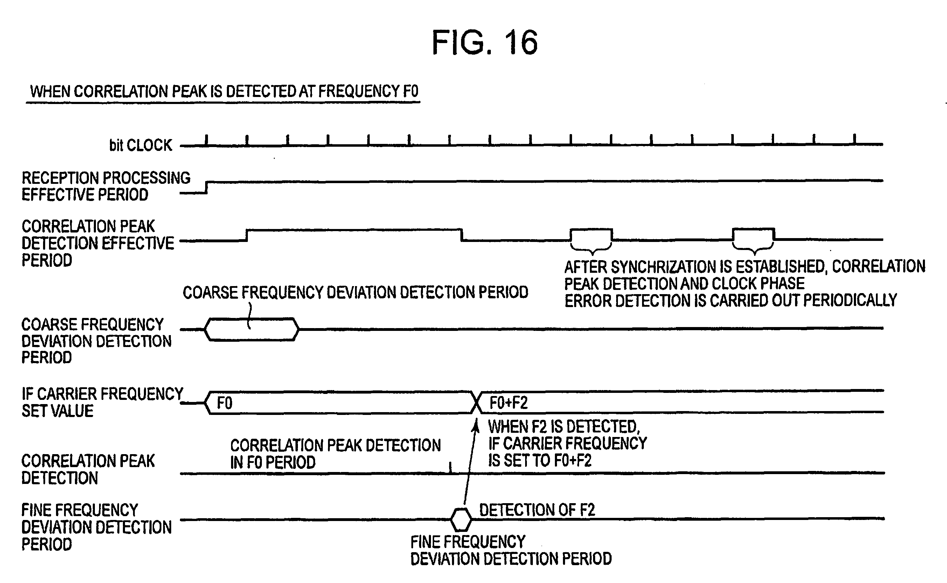

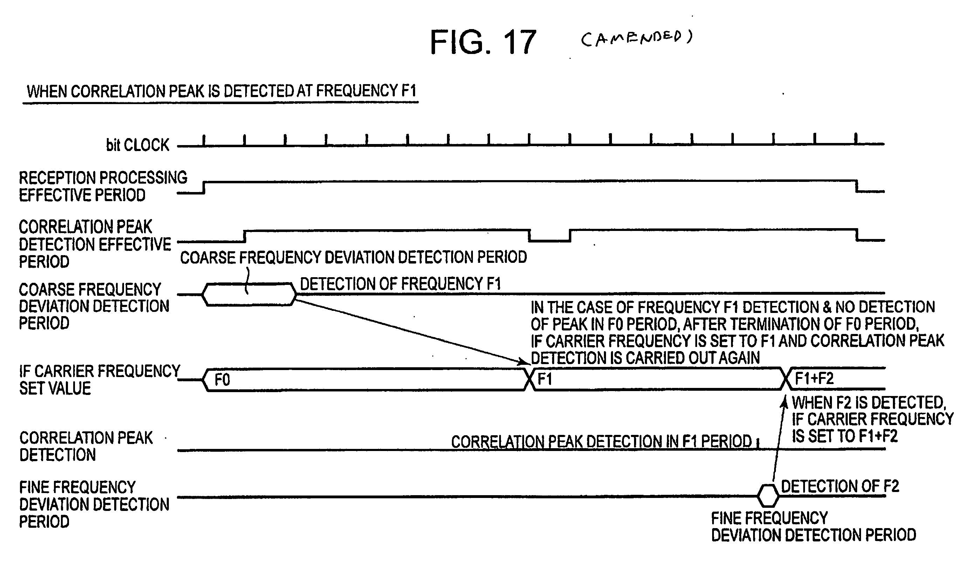

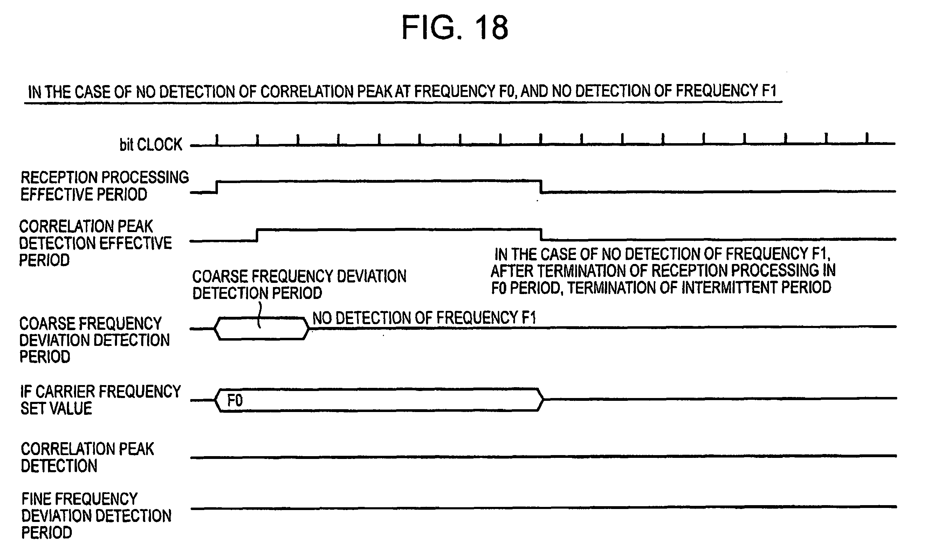

Next, reception timing of F0/F1 will now be described with reference to Figs. 15 to 18. Fig. 15 is a timing chart illustrating base timing; Fig. 16 is a chart illustrating timing when the correlation peak is detected at the frequency F0; Fig. 17 is a chart illustrating timing when the correlation peak is detected at the frequency F1; and Fig. 18 is a chart illustrating timing when there is no detection of the correlation peak at the frequency F0 and no detection of the frequency F1.

### [Base Timing]

As shown in Fig. 15, the reception processing effective period at the base timing constitutes 16-bit clocks where a first clock and a ninth clock in the period corresponds to a period in which carrier demodulation data is inputted to the matched filter unit 19. The correlation peak detection effective period corresponds to a period of a second clock to an eighth clock and a period of a ninth clock to a sixteenth clock.

The first to second clocks correspond to the coarse frequency deviation detection period. The frequency F0 is set to a period of the first clock to the eighth clock (F0 period), and the frequency F1 is set to a period of the ninth clock to the sixteenth clock (F1 period), respectively, as the IF carrier frequency set value.
However, when the frequency F1 is set as the IF carrier frequency, the current frequency F1 is detected, and when there is no peak detection in the F0 period, the IF carrier frequency is set to the frequency F1 after the F0 period is terminated, so as to carry out the correlation peak detection again.

### [The Case of Detection of Correlation Peak in the F0 period]

Next, the case of the detection of the correlation peak in the F0 period will now be described with reference to Fig. 16.
When the correlation peak is detected in the F0 period, the correlation peak detection effective period is terminated. The IF carrier frequency is set to a frequency (F0+F2) made by adding the fine frequency F2 detected in the fine frequency deviation detection period after the correlation peak detection to the frequency F0.
Then, after the synchronization is established, the correlation peak detection and the clock phase error detection are carried out by turning on the correlation peak detection effective period periodically.
Therefore, it is possible to effectively carry out the intermittent reception and efficiently carry out the correlation peak with the proper IF carrier frequency set value.

### [The Case of Detection of Correlation Peak in the F1 period)

Next, the case of the detection of the correlation peak in the F1 period will now be described with reference to Fig. 17.
The case where the correlation peak is not detected in the F0 period but in the F1 period means that the current frequency F1 is detected in the coarse frequency deviation detection period in the F0 period, and when there is no peak detection in the F0 period, the IF carrier frequency is set to the frequency F1 after the F0 period is terminated, and then the correlation peak detection is carried out again, so that the correlation peak is detected in the F1 period.
In this case, after the synchronization is established, the IF carrier frequency is set to and a frequency (F1+F2) made by adding the frequency F2 detected in the fine frequency deviation detection period in the F1 period to the frequency F1, and the correlation peak detection and the clock phase error detection are carried out by turning on the correlation peak detection effective period periodically.
Therefore, it is possible to effectively carry out the intermittent reception and efficiently carry out the correlation peak with the proper IF carrier frequency set value.

[The Case of No Detection of Correlation Peak in F0 period and No Detection of F1]
Next, the case where the correlation peak is not detected in the F0 period and there is no detection of the frequency F1 will now be described with reference to Fig. 18.
When the correlation peak is not detected in the F0 period and the current frequency F1 is not detected in the coarse frequency deviation detection period in the F0 period, the intermittent reception is terminated after the reception in the F0 period is terminated. If the intermittent reception is terminated, the reception processing is not carried out until the next frequency F0 reception is started.

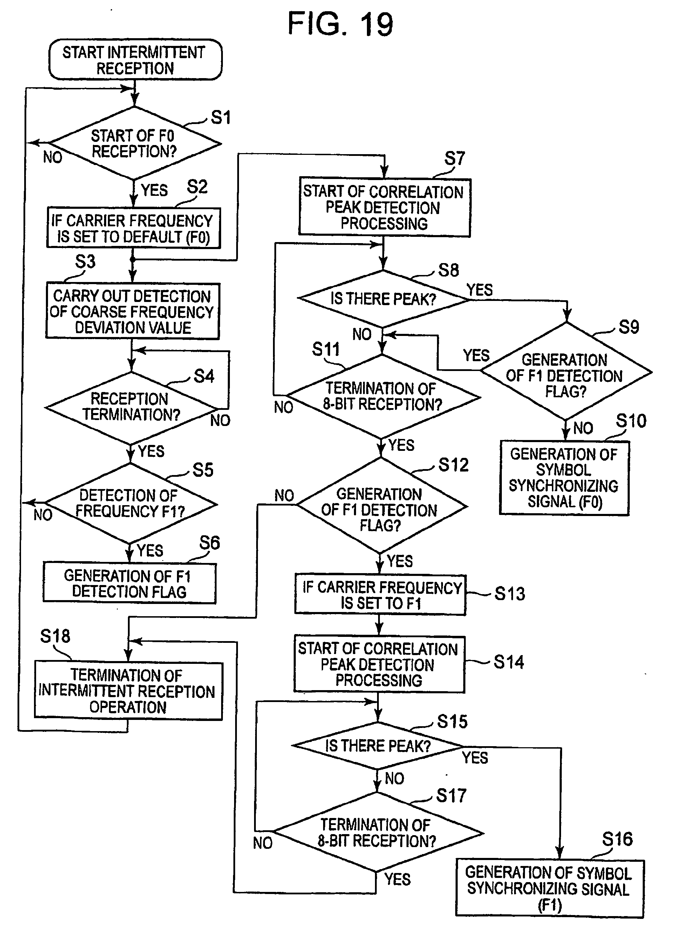

### [Control Flow of Correlation Peak Detection Processing: Fig. 19]

The correlation peak detection processing will now be described with reference to Fig. 19. Fig. 19 is a flow chart illustrating the correlation peak detection processing.
When the intermittent reception is started, it is determined whether or not the frequency F0 reception is started (S1). If not (No in this case), the processing S1 is repeated.

If the frequency F0 reception is started (Yes in this case), the IF carrier frequency is set to the default frequency F0 (S2), and the processing proceeds to S3 and S7.
In the processing S3 line, the coarse frequency deviation detection processing is carried out (S3), and then it is determined whether or not the reception is terminated (S4). The determining processing is repeated until the reception is terminated.

When the reception is terminated (Yes in this case), it is determined whether or not the frequency F1 is detected (S5). If the frequency F1 is not detected (No in this case), the processing is returned to S1. If the frequency F1 is detected (Yes in this case), an F1 detection flag is generated (S6).

Further, in the processing S7 line, the correlation peak detection processing is started after the frequency F0 is set (S7), and it is determined whether or not there is the correlation peak (S8).
If it is determined that there is the peak (Yes in this case), it is determined whether or not the F1 detection flag is generated (S9). If the F1 flag is not generated (No in this case), the symbol synchronizing signal at the frequency F0 is generated (S10).

If it is determined that there is no peak in the determining processing S8 (No in this case), or if it is determined that the F1 flag is generated in the determining processing S9 (Yes in this case), a determining processing of a termination of 8-bit reception (S11) is carried out. If it is determined that the 8-bit reception is not terminated (No in this case), the processing is returned to the determining processing S8.

If it is determined that the 8-bit reception is terminated (Yes in this case), it is determined whether or not the F1 detection flag is generated (S12). If the F1 flag is not generated (No in this case), the operation of the intermittent reception is terminated (S18), and the processing is returned to the determining processing S1.

If it is determined that the F1 flag is generated in the determining processing S12 (Yes in this case), the IF carrier frequency is set to the frequency F1 (S13), the correlation peak detection processing is started (S14), and it is determined whether or not there is the correlation peak (S15).

If it is determined that there is the correlation peak (Yes in this case), the symbol synchronizing signal at the frequency F1 is generated (S16).
If it is determined that there is no correlation peak (No in this case), it is carried out a determining processing of a termination of the 8-bit reception (S17). If it is determined that the 8-bit reception is not terminated (No in this case), the processing is returned to the determining processing S15.

If it is determined that the 8-bit reception is terminated (Yes in this case), the operation of the intermittent reception is terminated (S18), and the processing is returned to the determining processing S1.
As describe above, the correlation peak detection processing according to the operation of the intermittent reception is carried out.

According to the signal processing unit and the wireless communication device provided therewith, the correlation peak detection is carried out while correcting the frequency to be set to the IF carrier frequency, so that it is possible to properly and efficiently carry out the correlation peak detection.

### Industrial Applicability

The invention is applicable to a wireless communication device which makes it possible to properly and efficiently carry out correlation peak detection in an intermittent reception in a receiving unit.

## Claims

1. A wireless communication device which
intermittently receives a wireless signal and detects a correlation peak from the received signal, comprising a signal processing unit which includes:
a carrier data generating unit (16) configured to generate IF carrier data according to a frequency deviation;
a carrier demodulating unit (15) configured to carry out carrier demodulation based on the generated IF carrier data;
a correlation peak detecting unit (22) configured to detect the correlation peak of the demodulated carrier demodulation data;
a coarse frequency deviation detecting unit (23) configured to detect a coarse frequency deviation from the demodulated carrier demodulation data;
a fine frequency deviation detecting unit (24) configured to detect a fine frequency deviation from the detected correlation peak; and
a control unit (25) configured to control reception operation in a wireless communication unit,
**characterized in that** when the correlation peak is detected in a first period in which the correlation peak is detected at a default frequency (F0) and a second frequency (F2) is detected in a detection period of the fine frequency deviation detecting unit (24) in the first period, the control unit (25) allows the correlation peak detecting unit (22) to carry out correlation peak detection at a frequency made by adding the second frequency (F2) to the default frequency (F0) in a second period following the first period.

2. The wireless communication device according to Claim 1,
wherein the control unit (25) allows the correlation peak detection unit (22) periodically to carry out the correlation peak detection and clock phase error detection at a frequency made by adding the second frequency (F2) to the default frequency (F0) after the correlation peak is detected and synchronization is established.

3. The wireless communication device according to Claim 1,
wherein when the correlation peak is not detected in a first period in which the correlation peak is detected at a default frequency (F0) and a first frequency (F1) is detected in a detection period of the coarse frequency deviation detecting unit (23) in the first period, the control unit (25) allows the correlation peak detecting unit (22) to carry out correlation peak detection at the first frequency (F1) in a second period following the first period, and when the correlation peak detecting unit (22) detects the correlation peak and a second frequency (F2) is detected in a detection period of the fine frequency deviation detecting unit (24), the control unit (25) allows the correlation peak detecting unit (22) to carry out the correlation peak detection at a frequency made by adding the second frequency (F2) to the first frequency (F1) in a third period following the second period.

4. The wireless communication device according to Claim 3,
wherein the control unit (25) allows the correlation peak detection unit (22) periodically to carry out the correlation peak detection and clock phase error detection at a frequency made by adding the second frequency (F2) to the first frequency after the correlation peak is detected and the synchronization is established.

5. The wireless communication device according to Claim 1,
wherein when the correlation peak is not detected in a first period in which the correlation peak is detected at a default frequency (F0) and a first frequency (F1) is not detected in a detection period of the coarse frequency deviation detecting unit (23) in the first period, the control unit (25) terminates the intermittent reception control after the first period is terminated.

## Patentansprüche

1. Drahtlose Kommunikationseinrichtung, die
ein drahtloses Signal intermittierend empfängt und eine Korrelationsspitze aus dem empfangenen Signal erfasst und die eine Signalverarbeitungseinheit aufweist, welche umfasst:
eine Trägerdatendaten-Erzeugungseinheit (16), die dazu konfiguriert ist, ZF-Trägerdaten gemäß einer Frequenzabweichung zu erzeugen;
eine Trägerdemodulationseinheit (15), die dazu konfiguriert ist, eine Trägerdemodulation auf der Grundlage der erzeugten ZF-Trägerdaten durchzuführen;
eine Korrelationsspitzen-Erfassungseinheit (22), die dazu konfiguriert ist, die Korrelationsspitze der demodulierten Träger-Demolationsdaten zu erfassen;
eine Grobfrequenz-Abweichungserfassungseinheit (23), die dazu konfiguriert ist, eine grobe Frequenzabweichung aus den demodulierten Trägerdemodulationsdaten zu erfassen;
eine Feinfrequenz-Abweichungserfassungseinheit (24), die dazu konfiguriert ist, eine feine Frequenzabweichung aus der erfassten Korrelationsspitze zu erfassen;
eine Steuereinheit (25), die dazu konfiguriert ist, den Empfangsbetrieb in einer drahtlosen Kommunikationseinheit zu steuern,
**dadurch gekennzeichnet, dass** dann, wenn die Korrelationsspitze in einer ersten Periode erfasst wird, in der die Korrelationsspitze bei einer voreingestellten Frequenz (F0) erfasst wird, und eine zweite Frequenz (F2) in einer Erfassungsperiode der Feinfrequenz-Abweichungserfassungseinheit (24) in der ersten Periode erfasst wird, die Steuereinheit (25) es zulässt, dass die Korrelationsspitzen-Erfassungseinheit (22) eine Korrelationsspitzenerfassung in einer zweiten Periode, welche der ersten Periode folgt, bei einer Frequenz ausführt, die erhalten wird, durch Addieren der zweiten Frequenz (F2) zu der voreingestellten Frequenz (F0).

2. Drahtlose Kommunikationseinrichtung nach Anspruch 1,
wobei die Steuereinheit (25) es zulässt, dass die Korrelationsspitzen-Erfassungseinheit (22) periodisch die Korrelationsspitzenerfassung und eine Taktphasen-Fehlererfassung bei einer Frequenz ausführt, die durch Addieren der zweiten Frequenz (F2) zu der voreingestellten Frequenz (F0) erhalten wird, nachdem die Korrelationsspitze erfasst und die Synchronisation eingerichtet ist.

3. Drahtlose Kommunikationseinrichtung nach Anspruch 1,
wobei dann, wenn die Korrelationsspitze nicht in der ersten Periode erfasst wird, in der die Korrelationsspitze bei einer voreingestellten Frequenz (F0) erfasst wird und eine erste Frequenz (F1) in einer Erfassungsperiode der Grobfrequenz-Abweichungserfassungseinheit (23) in der ersten Periode erfasst wird, die Steuereinheit (25) der Korrelationsspitzen-Erfassungseinheit (22) erlaubt, die Korrelationsspitzenerfassung bei der ersten Frequenz (F1) in einer zweiten Periode durchzuführen, welche der ersten Periode folgt, und wobei dann, wenn die Korrelationsspitzen-Erfassungseinheit (22) die Korrelationsspitze erfasst und eine zweite Frequenz (F2) in einer Erfassungsperiode der Feinfrequenz-Abweichungserfassungseinheit (24) erfasst wird, die Steuereinheit (25) der Korrelationsspitzen-Erfassungseinheit (22) erlaubt, die Korrelationsspitzenerfassung in einer dritten Periode, welche der zweiten Periode folgt, bei einer Frequenz auszuführen, die durch Addieren der zweiten Frequenz (F2) zu der ersten Frequenz (F1) erhalten wird.

4. Drahtlose Kommunitkationseinrichtung nach Anspruch 3,
wobei die Steuereinheit (25) der Korrelationsspitzen-Erfassungseinheit erlaubt, die Korrelationsspitzenerfassung und eine Taktphasen-Fehlererfassung periodisch bei einer Frequenz auszuführen, welche durch Addieren der zweiten Frequenz (F2) zu der ersten Frequenz erhalten wird, nachdem die Korrelationsspitze erfasst und die Synchronisation eingerichtet ist.

5. Drahtlose Kommunikationseinrichtung nach Anspruch 1,
wobei dann, wenn die Korrelationsspitze nicht in der ersten Periode erfasst wird, in der die Korrelationsspitze bei der voreingestellten Frequenz (F0) erfasst wird, erste und eine Frequenz (F1) nicht in einer Erfassungsperiode der Grobfrequenz-Abweichungserfassungseinheit (23) in der ersten Periode erfasst wird, die Steuereinheit (25) die intermittierende Empfangssteuerung beendet, nachdem die erste Periode beendet ist.

## Revendications

1. Dispositif de communication sans fil qui
reçoit par intermittence un signal sans fil et détecte un pic de corrélation à partir du signal reçu, comprenant une unité de traitement de signal qui comprend :
une unité de génération de données de porteuse (16) agencée pour générer des données de porteuse IF conformément à une déviation de fréquence ;
une unité de démodulation de porteuse (15) agencée pour réaliser une démodulation de porteuse sur la base des données de porteuse IF générées ;
une unité de détection de pic de corrélation (22) agencée pour détecter le pic de corrélation des données de démodulation de porteuse démodulées ;
une unité de détection de déviation de fréquence grossière (23) agencée pour détecter une déviation de fréquence grossière à partir des données de démodulation de porteuse démodulées ;
une unité de détection de déviation de fréquence fine (24) agencée pour détecter une déviation de fréquence fine à partir du pic de corrélation détecté ; et
une unité de commande (25) agencée pour contrôler une opération de réception dans une unité de communication sans fil,
**caractérisé en ce que**, lorsque le pic de corrélation est détecté dans une première période dans laquelle le pic de corrélation est détecté à une fréquence par défaut (F0) et une deuxième fréquence (F2) est détectée dans une période de détection de l'unité de détection de déviation de fréquence fine (24) dans la première période, l'unité de commande (25) permet à l'unité de détection de pic de corrélation (22) de réaliser une détection de pic de corrélation à une fréquence obtenue en ajoutant la deuxième fréquence (F2) à la fréquence par défaut (F0) dans une deuxième période suivant la première période.

2. Dispositif de communication sans fil selon la revendication 1,
dans lequel l'unité de commande (25) permet à l'unité de détection de pic de corrélation (22) de réaliser périodiquement la détection de pic de corrélation et une détection d'erreur de phase d'horloge à une fréquence obtenue en ajoutant la deuxième fréquence (F2) à la fréquence par défaut (F0) après la détection du pic de corrélation et l'établissement de la synchronisation.

3. Dispositif de communication sans fil selon la revendication 1,
dans lequel lorsque le pic de corrélation n'est pas détecté dans une première période dans laquelle le pic de corrélation est détecté à une fréquence par défaut (F0) et une première fréquence (F1) est détectée dans une période de détection de l'unité de détection de déviation de fréquence grossière (23) dans la première période, l'unité de commande (25) permet à l'unité de détection de pic de corrélation (22) de réaliser une détection de pic de corrélation à la première fréquence (F1) dans une deuxième période suivant la première période, et lorsque l'unité de détection de pic de corrélation (22) détecte le pic de corrélation et une deuxième fréquence (F2) est détectée dans une période de détection de l'unité de détection de déviation de fréquence fine (24), l'unité de commande (25) permet à l'unité de détection de pic de corrélation (22) de réaliser la détection de pic de corrélation à une fréquence obtenue en ajoutant la deuxième fréquence (F2) à la première fréquence (F1) dans une troisième période suivant la deuxième période.

4. Dispositif de communication sans fil selon la revendication 3,
dans lequel l'unité de commande (25) permet à l'unité de détection de pic de corrélation (22) de réaliser périodiquement la détection de pic de corrélation et une détection d'erreur de phase d'horloge à une fréquence obtenue en ajoutant la deuxième fréquence (F2) à la première fréquence après la détection du pic de corrélation et l'établissement de la synchronisation.

5. Dispositif de communication sans fil selon la revendication 1,
dans lequel, lorsque le pic de corrélation n'est pas détecté dans une première période dans laquelle le pic de corrélation est détecté à une fréquence par défaut (F0) et une première fréquence (F1) n'est pas détectée dans une période de détection de l'unité de détection de déviation de fréquence grossière (23) dans la première période, l'unité de commande (25) met fin à la commande de réception intermittente après la fin de la première période.
